Europäisches Patentamt

European Patent Office

Office européen des brevets

(11) Publication number: **0 416 531 A2**

(12) **EUROPEAN PATENT APPLICATION**

(21) Application number: 90116962.3

(51) Int. Cl.⁵: **G01C 19/72**

(22) Date of filing: 04.09.90

(30) Priority: 07.09.89 US 404039

(43) Date of publication of application:
13.03.91 Bulletin 91/11

(84) Designated Contracting States:
DE FR GB IT SE

(71) Applicant: HONEYWELL INC.
Honeywell Plaza
Minneapolis MN 55408(US)

(72) Inventor: Sanders, Glen A.
13359 North 101st Place
Scottsdale, AZ 85206(US)

(74) Representative: Herzbach, Dieter et al
Honeywell Europe S.A. Holding KG Patent &
License Dept. Kaiserleistrasse 55 Postfach
10 08 65
W-6050 Offenbach am Main(DE)

(54) Serrodyne resonator fiber optic gyroscope and method for operating it.

(57) A dual serrodyne resonator fiber optic gyroscope (60) utilizing two positive-going or two negative-going ramp signals having a frequency difference, to track resonance frequencies of laser light traveling in two directions in a fiber optic resonator (24). The difference in the servo-controlled variable ramp frequencies is proportional to rotation rate and is indicative of direction of rotation.

Fig. 2

# SERRODYNE RESONATOR FIBER OPTIC GYROSCOPE AND METHOD FOR OPERATING IT

Field of the Invention

The invention pertains to serrodyne resonator fiber optic gyroscopes according to the preamble of the independent claims and to a method for operating it.

Background of the Invention.

Fiber optic gyroscopes (FOGs} have been developed for navigation and guidance applications. FOGs are solid state devices and have the potential advantages of long life, no moving parts, ruggedness, light weight, low cost potential, freedom from warm-up or run-up time, and low voltage power.

Several types of FOGs that have been developed are open loop and closed loop interferometric fiber optic gyroscopes (IFOGs), respectively, and resonant fiber optic gyroscopes (RFOGs). In basic terms, an open loop IFOG typically consists of a semiconductor source whose light is divided. About half of the light goes into one end of a fiber optic coil and propagates clockwise and the remaining light goes into the other end of the coil and propagates counterclockwise around the coil. Light from the clockwise and counterclockwise beams emerging from the ends of the coil is combined and its intensity is measured by a photodetector. When the device is not rotating, the emerging light beams combine in phase for maximum intensity to produce a maximum output signal from the photodetector. Upon rotation of the IFOG, there is a resulting phase difference between the the two emerging beams which creates an interference that reduces the intensity of the combined beam and thus the photodetector output signal. Such design has several drawbacks in that it has the least sensitivity near the at-rest condition and that the photodetector output does not indicate the direction of rotation. These characteristics can be improved if the phase between the clockwise and counterclockwise beams is shifted (i.e., biased) by 90 degrees. Typically, bias is introduced by an electro-optical phase modulator which varies the phase shift in a sinusoidal fashion. By demodulating the photodetector output signal at the same frequency, the demodulated output signal will have the desired maximum sensitivity near the at-rest condition. Also, the demodulated signal has opposite polarity for clockwise and counterclockwise inertial rotation, thus explicitly indicating the direction of rotation. Bias stability (i.e., the FOG's random drift rate in degrees per hour) is reasonably favorable. A major shortcoming of the open loop IFOG is that its output signal is only strictly linearly proportional to its rotation rate near zero rotation rates. The output becomes increasingly nonlinear at higher rates. Secondly, the output at higher rates becomes increasingly sensitive to the gains of various electronic amplifiers which are not operating near null in the open-loop gyro configurations. To overcome such nonlinearity and dependencies on such absolute gain stabilities, a closed loop FOG was developed. With the closed loop version, rotation of the IFOG causes a phase shift between the clockwise and the counterclockwise beams, thereby generating a signal which is applied to a transducer to cancel the shift. Thus, the IFOG operates near its most sensitive null position. Absolute accuracies in the electronics are no longer critical.

In one particular closed loop IFOG configuration, referred to as the "serrodyne" technique, the phase-shift transducer located at one end of the coil is excited with a sawtooth voltage, thereby imparting on the light a phase ramp with periodic resets. The ramp height is adjusted to be $2\pi$ radians and the reset or flyback time is made to be very small compared to the period of the sawtooth; the light wave is effectively frequency shifted by frequency $\Delta f$ of the sawtooth wave. Since both clockwise and counterclockwise waves traverse the phase modulator, both are frequency shifted before being interfered at the photodetector. However, one light wave experiences the frequency shift before traversing the coil and one light wave is frequency shifted after traversing the coil. Because two light waves thus traverse the coil at different frequencies there is a net phase difference between them which is used to null out the phase shift due to rotation. The required sawtooth frequency or effective frequency shift $\Delta f$ necessary to produce a phase shift to counterbalance the phase shift due to rotation is a digital measure and linear measure of the rotation rate. This design increases the accuracy of the FOG since the output is a frequency which can be measured more accurately than an analog voltage in an open-loop case. The closed loop approach also improves the IFOG's dynamic range.

Another competing FOG technology is the RFOG which more closely resembles a ring laser gyroscope than an IFOG. The RFOG uses a short coil relative to the other FOG technologies, thereby reducing size, effects of thermal transient gradients, and cost. Also, the RFOG offers the greatest potential for enhanced accuracy. An IFOG uses a diode light source which is semi-coherent (i.e., broadband) whereas the RFOG utilizes a coherent (i.e., narrowband) light source. The RFOG's operation is based on the use of a fiber-optical cavity made from a few turns of optical fiber which is precisely tuned so that only certain discrete frequencies will travel through the cavity. The frequencies that can travel through the optical cavity in the clockwise and counterclockwise directions are known as the clockwise and counterclockwise resonant frequencies of the cavity. The clockwise and counterclockwise resonance frequencies are the same in the absence of rotation, but split in the presence of rotation. To measure this frequency splitting, a closed loop design is incorporated. Since the RFOG measures rotation-induced resonant frequency splitting in a fiber resonator, a frequency shifter is required to track the clockwise and the counterclockwise frequencies. In practice the only suitable frequency shifting technique using a "guided-wave" implementation is to use a phase modulator in conjunction with the serrodyne modulation technique. Serrodyne modulation has commonly been associated with baseband frequency shifting. However, baseband frequency shifting in the related art presents several problems when implemented in RFOGs. Namely, the use of both positive and negative going ramp signals are required to handle clockwise and counterclockwise rotation rates. Further, long ramp signals are required to null low rotation rates and the ramp signals needed to be nearly perfect in slope because imperfect ramps generate unwanted sideband frequency components which result in gyroscope errors.

## Summary of the Invention

It is the object of the present invention to devise a serrodyne resonator fiber optic gyroscope and a method for operating it which eliminates the problems of baseband frequency shifting and therefore effects a practical and successful implementation of such a gyro.

This object is achieved by the characterizing features of the independent claims. Further advantageous embodiments of the inventive gyroscope may be taken from the dependent claims.

The invention is a dual serrodyne that utilizes two positively going ramps (or two negatively going ramps) to track the resonance frequencies of a fiber resonator of the gyroscope and therefore determine its rotation rate. Each of the serrodyne frequencies is no longer at the baseband frequency but at an appropriate nominal frequency. The difference in the two ramp frequencies, when properly servo-controlled, is proportional to rotation. This invention permits the use of relatively fast ramp signals and eliminates the need for any one modulator to be driven from positive to negative going ramp signals (or vice versa) as the rotation rate of the gyroscope changes direction.

## Brief Description of the Drawings

Figure 1 is a diagram showing an RFOG using dual serrodyne modulation by varying two ramp signals.

Figure 2 is a diagram showing the RFOG using dual serrodyne modulation by varying one ramp signal.

Figure 3 illustrates the resonant dips of intensities of light traveling in different directions in a fiber optic resonator ring of the RFOG.

## Description of the Preferred Embodiment

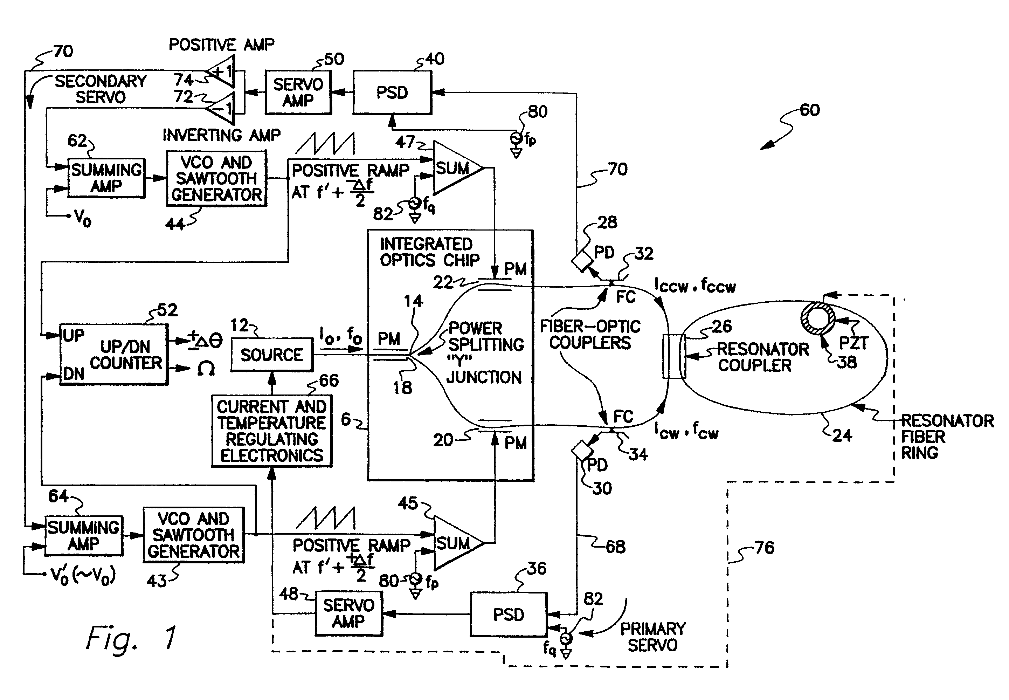

The basic operation of the RFOG 60 with dual serrodyne modulation is illustrated in Figure 1. Coherent and monochromatic light from tunable single frequency laser source 12 at frequency $f_0$ and intensity $I_0$ is split into two beams by power splitter 14 of integrated optical device 16. Laser source 12 may be tuned so that the frequency of the light entering ring 24 in the counterclockwise and clockwise directions via resonator coupler 26 is at the center of resonance of ring 24 which is a fiber optic resonator, typically consisting between 1 and 100 meters of fiber. The input light circulates in fiber optic ring 24 in clockwise (cw) and counterclockwise (ccw) directions.

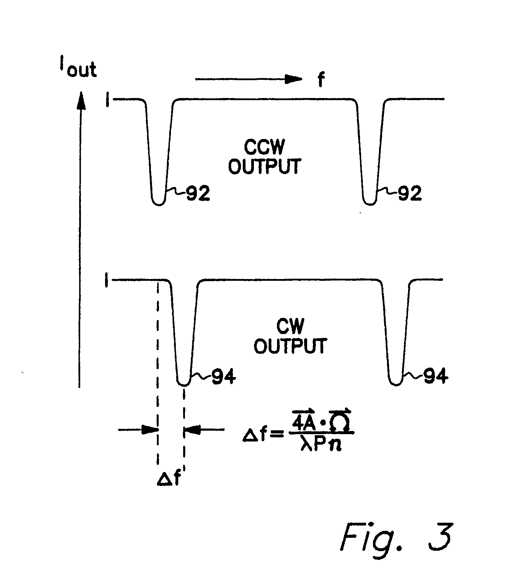

The cw and ccw light of resonator ring 24 comes out through coupler 26 and the light is sensed by photodetectors (PDs) 28 and 30 (having preamplifiers) via fiber optic couplers (FCs) 32 and 34, respectively. The output of photodetectors 28 and 30 as a function of the input light frequencies is sometimes described in the art as a resonance dip (92 or 94 as shown in Figure 3) when the input light is tuned near resonance. The resonance dip may be substituted with a resonance peak or other signal variation indicating resonance. The average frequency $f_{ccw}$ of the ccw input wave is automatically adjusted to the ccw resonance frequency of resonator 24 based on the sensing by phase sensitive demodulator (PSD) 36 the presence of a signal at $f_q$ on photodetector 30, and by using the output of phase sensitive detector 36 as the basis for an error signal to adjust the ccw input frequency (where $f_{ccw}$ is equal to $f_0 + f'$ in a no rotation case) via electronics 66 that varies source 12 so that $f_{ccw}$ matches the ccw resonant ring 24 frequency. In another embodiment of RFOG 60, primary servo loop 68, through servo amplifier 48, may instead maintain the ccw resonance condition by controlling the cavity path length via connection 76 and piezo length adjuster (PZT) 38 in resonator ring 24.

In servo loop 70, a cw departure from resonance is sensed by phase sensitive detector 40 which senses a signal at $f_p$ corresponding to a shift from the center of the resonance dip seen on the output of photodetector 28. Servo loop 70 then imparts a frequency difference $\Delta f$ between the cw and ccw frequencies to null out rotation. Servo 70 provides nulling by applying positive frequency shifts to both cw and ccw inputs which are nominally large and then the difference $\Delta f$ between the inputs is tuned to null rotation. Both frequency shifts are obtained by applying to phase modulators (PMs) 20 and 22 nominal sawtooth voltage waveforms from generators 43 and 44 via summing amplifiers 45 and 47, respectively, which both have a frequency $f'$ in absence of rotation. Generators 43 and 44 (which generate sawtooth waveform output of frequencies determined by voltage level inputs having a frequency based from voltage controlled oscillators (VCOs)). These waveforms at $f'$ are determined by constant but adjustable voltages $V_0$ and $V_0'$ to summing amplifiers 62 and 64. The varying frequency increases or decreases are determined by additional but varying voltages from inverting amplifier 72 and noninverting amplifier 74 to summing amplifiers 62 and 64, respectively.

Each sawtooth waveform, introduced through modulators 20 and 22, respectively, generates a phase ramp on the light that provides an increasing magnitude representing a variation from 0 to $2\pi$, with a fast flyback time, otherwise known as a serrodyne waveform, to effectively implement a frequency-shift difference between input light beams of $\Delta f$. In the presence of rotation,

$$\Delta f = f_{cw} - f_{ccw} = (4A/\lambda Pn)\Omega$$

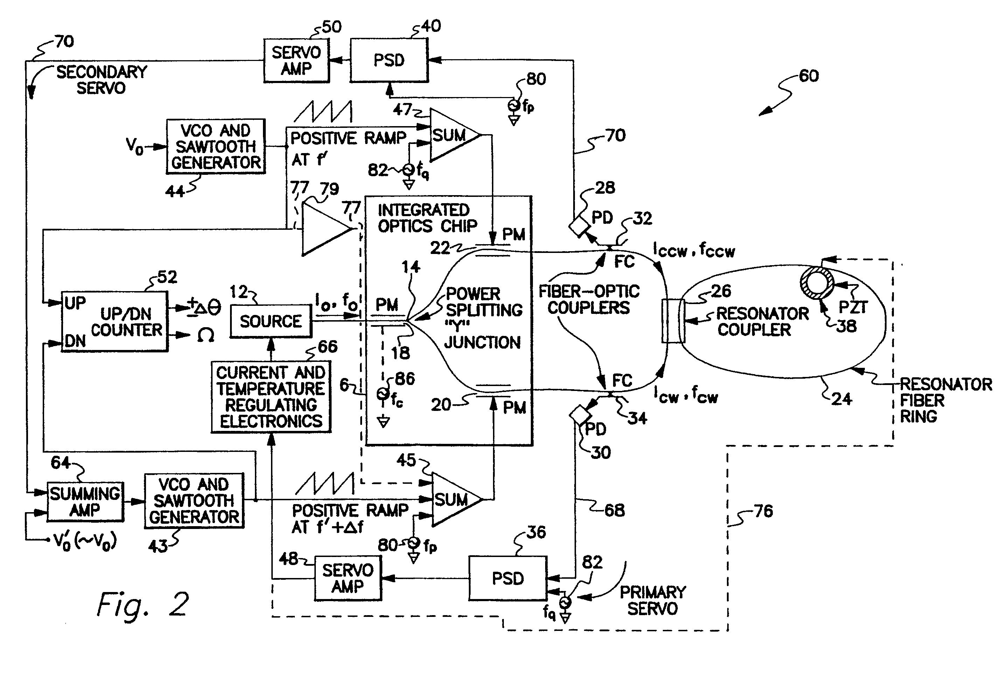

where $\Omega$ is the rotation rate, A is the area within the loop 24 perpendicular to its axis, P is the perimeter of loop 24, n is the index of refraction of the fiber and g is the wavelength of the light. In Figures 1 and 2, $\pm\Delta\theta$ indicates the direction and amount of rotation.

Relatively high frequency rates for the sawtooth signals may be used. For instance, $f'$ may be 100 kilohertz and vf may be as large as 50 kilohertz. When the gyroscope is undergoing rotation, one sawtooth ramp is driven faster (i.e., at a faster rate) than $f'$ by the amount of $\Delta f/2$ and the other ramp is driven slower by $-\Delta f/2$, wherein the total difference of sawtooth frequency from $f'$ is $\Delta f$. The $f_{cw}$ of the light moving cw in ring 24 is adjusted by $+\Delta f/2$ and the $f_{ccw}$ of the light moving ccw in ring 24 is adjusted by $-\Delta f/2$, for aligning the input light frequencies to the centers of the resonance dips 92 and 94 of ring 24.

By counting the number of zero crossings of the two ramps with up/down counter 52, the angular displacement rate as well as direction of rotation can be determined. The output of up/down counter 52 may be measured in one second intervals to obtain $\Delta f$.

Each light beam is sinusoidally phase modulated with fixed frequencies $f_p$ and $f_q$, from generators 80 and 82 and via phase modulators 20 and 22, respectively, prior to entering fiber ring resonator 24 via resonator coupler 26. If $f_p = f_q$, then the fixed frequency signals of $f_p$ or $f_q$ may be introduced via phase modulator 18 (which may be an NLiNbO$_3$ integrated optical phase modulator). If more than negligible backscatter exists in the system's light paths, then $f_p \neq f_q$. Frequencies $f_p$ and $f_q$ from generators 80 and 82 provide signatures on the light via summing amplifiers 45 and 47 and phase modulators 20 and 22. These signatures are detected by the photodetectors 28 and 30, and phase sensitive detectors 40 and 36, respectively, which receive the relevant signals for identification purposes from generators 80 and 82. Frequencies selected for $f_p$ and $f_q$ may be from 20 kilohertz to 1 megahertz.

Frequency $f_p$ is added on top of the ramp signal through summing amplifier 45. These modulations at $f_p$ and $f_q$ produce discriminants to enable sensing the directions of the departures of the average input light frequencies $f_{cw}$ and $f_{ccw}$ from the resonance frequencies of resonator 24. In other words, frequencies $f_p$ and $f_q$ provide, in essence, a dither so that phase sensitive detectors 40 and 36, respectively, can indicate the direction of the needed shift of the frequency of light to the resonance centers of ring 24.

The dual serrodyne approach of Figure 1 may be simplified as shown in Figure 2. Figure 2 has become the best mode contemplated by the inventor for carrying out his invention at the present date. Figure 2 involves applying merely a fixed (non-servo-controlled) frequency shift $f'$ to the ccw input light beam (by applying a fixed-frequency sawtooth at a frequency $f'$ to phase modulator 22) and then to servo-control only the positive-going sawtooth ramp that is applied to phase modulator 20. The output of servo amplifier 50 is directly connected to summing amplifier 64 and thereby controls generator 43 and the frequency of the ramp signal eventually applied to modulator 20. In the presence of rotation, the cw input would be tuned to $f_0 + f' + \Delta f$. In absence of rotation, the cw input frequency would automatically be tuned to $f_0 + f'$.

An alternative connection for generator 44 would be to have its output disconnected from summer 47 and connected to summer 45 with generator 43, via buffer 79 and connecting line 77. Also, if $f_p = f_q$, then $f_c$, which is equal to $f_p$ and $f_q$, may be entered from generator 86 to phase modulator 18 in lieu of generators 80 and 82.

The foregoing detailed description of the dual serrodyne resonator fiber optic gyroscope is intended to be exemplary rather than limiting, and the description sets forth the best mode contemplated by the inventor of carrying out his invention. Numerous modifications and variations to the present invention will be obvious to those skilled in the art without deviating from the spirit of the invention. Accordingly, all such variations and modifications to present invention are deemed to fall within the scope of the present invention.

## Claims

1. A serrodyne resonator fiber optic gyroscope (60) **characterized by:**
light source means (12) for providing light;
first fiber optic means, connected to said light source means, for conveying a first light component;
splitting means (14), connected to said fiber optic transmission means, for splitting the first light into second and third light components;
second fiber optic means, connected to said splitting means, for conveying the second light component;
third fiber optic means, connected to said splitting means and to said second fiber optic means, for conveying the third light component;
fiber optic resonator means (24), coupled to said second and third fiber optic means, for providing resonance of second and third light components;
first phase sensitive detection means (28, 32, 40, 50, 80), connected to said second fiber optic means, for detecting resonance departure in the third light component;
second phase sensitive detection means (30, 34, 36, 48, 82), connected to said third fiber optic means, for detecting resonance departure in the second light component;
first servo means (40, 50), connected to said first phase sensitive detection means (28), for providing a feedback signal indicating departure of the third light component from resonance;
second servo means (36, 48), connected to said second phase sensitive detection means (30) and to said light source means (12), for providing a feedback signal indicating departure of the second light component from resonance;
first waveform generating means (44, 47), connected to said second fiber optic means, for introducing a frequency change in the third light component;
second waveform generating means (43, 45), connected to said third fiber optic means and to said first servo means, for introducing a frequency change in the second light component; and
counter means (52), connected to said first and second waveform generating means (43, 44), for indicating rotation rate and direction of said gyroscope.

2. Apparatus according to claim 1, **characterized in that** said first servo means (40, 50) is connected to said first waveform generating means (43).

3. Apparatus according to claim 1, **characterized in that:**
said first phase detection means comprises:
a first phase sensitive detector (40) connected to said first servo means (50);
a first photodetector (28) connected to said first phase sensitive detector;
a first optical coupler (32) connected to said first photodetector and to said second fiber optic means; and a first constant frequency generator (80) connected to said first phase sensitive detector (40) and to said second waveform generating means (45); and
said second phase detection means comprises:
a second phase sensitive detector (36) connected to said second servo means (48);
a second photodetector (30) connected to said second phase sensitive detector;
a second optical coupler (34) connected to said second photodetector and to said third fiber optic means; and
a second constant frequency generator (82) connected to said second phase sensitive detector (36) and to said first waveform generating means (47).

4. Apparatus according to claim 3, **characterized in that** said second servo means comprises:
a first amplifier (48) connected to said second phase sensitive detector (36); and
current and temperature regulating electronics (66) connected to said first amplifier (48) and to said light source means (12).

5. Apparatus according to claim 3, **characterized in that** said second servo means comprises:
a first amplifier (48) connected to said second phase sensitive detector (36); and
a piezo length adjuster connected to said first amplifier and to said fiber optic resonator means.

6. Apparatus according to claim 3, **characterized in that:**
said first waveform generating means comprises:
a first voltage controlled oscillator (44) connected to a first constant voltage ($V_0$);
a first wave generator (44) connected to said first voltage controlled oscillator and to said counter means (52);

a first summing amplifier (47) connected to said first waveform generator and to said second constant frequency generator (82); and

a first phase modulator (22) connected to said first summing amplifier and to said second fiber optic means; and

said second waveform generating means comprises:

a second voltage controlled oscillator (43);

a second wave generator (43) connected to said second voltage controlled oscillator and to said counter means (52);

a second summing amplifier (45) connected to said second wave generator and to said first constant frequency generator (80);

a second phase modulator (20) connected to said second summing amplifier and to said third fiber optic means; and

a third summing amplifier (64) connected to said second voltage controlled oscillator (43), to a second constant voltage, and to said first servo means (50).

7. Apparatus according to claim 6, **character ized in that** said light source means (12) is a laser.

8. A dual serrodyne resonator fiber optic gyroscope, **characterized by**:

a laser light source (12);

a light splitter (14) connected to said light source;

a first optical fiber connected to said light splitter;

a fiber optic resonator (24) coupled to said first optical fiber;

a first phase sensitive detector (28, 40) connected to said first optical fiber;

a first servo amplifier circuit (50) connected to said first phase sensitive detector and to said laser light source;

a second phase sensitive detector (30, 36) connected to said first optical fiber;

a second servo amplifier circuit (48) connected to said second phase sensitive detector;

a first ramp signal generator (43) connected to said second servo amplifier and said first optical fiber;

a second ramp signal generator (44) connected to said first optical fiber; and

an indicator (52) connected to said first and second ramp signal generators.

9. Apparatus according to claim 8, **characterized in that:**

said indicator (52) outputs a signal indicating a direction and rate of rotation of said gyroscope based on a frequency difference of outputs of said first and second ramp signal generators (43, 44) having variable frequency outputs added to light from said light splitter;

the light travels in counterclockwise and clockwise directions in said fiber optic resonator (24); and the varying frequency outputs are added to the light to maintain the light in counterclockwise and clockwise directions at resonance in said fiber optic resonator during any amount of rotation of said gyroscope.

10. Method for determining rate and direction of rotation in a resonator fiber optic gyroscope, **characterized by** :

introducing a first light of a first frequency in a first direction of a fiber optic resonator;

introducing the light of the first frequency in a second direction of the fiber optic resonator;

introducing a variable frequency first ramp signal on the first frequency, having a variation of light intensity indicative of resonance of the light in the first direction, so as to attain resonance in the first direction in the resonator optic fiber for no rotation of said gyroscope;

introducing a variable frequency second ramp signal on the second frequency, having a variation of light intensity indicative of resonance of the light in the second direction, so as to attain resonance in the second direction in the resonator optic fiber for no rotation of said gyroscope, wherein the variations of intensities of first and second directions are aligned;

varying frequency of at least one ramp signal upon rotation of said gyroscope to maintain alignment of the variations of intensities of light in the first and second directions; and

determining a rate and direction of rotation of said gyroscope from a difference of frequencies of the first and second ramp signals due to said varying frequency of at least one ramp signal.

Fig. 1

Fig. 2

EP 0 416 531 A2

$$\Delta f = \frac{\overrightarrow{4A} \cdot \overrightarrow{\Omega}}{\lambda P n}$$

Fig. 3